# EUROPÄISCHE PATENTSCHRIFT

(11) **EP 1 157 902 B1**
(45) Veröffentlichungstag und Bekanntmachung des Hinweises auf die Patenterteilung: **12.10.2005**
(21) Anmeldenummer: 01109239.2
(22) Anmeldetag: 14.04.2001
(51) Int. Cl.: B60R 21/18, B60R 21/16

(54) **Aufblasbare Kopfschutzvorrichtung für Insassen von Kraftfahrzeugen**
Inflatable device for motor vehicle occupant's head protection
Dispositif gonflable pour la protection de la tête d'un occupant de véhicule automobile

(30) Priorität: 25.05.2000 DE 10026024
(43) Veröffentlichungstag der Anmeldung: 28.11.2001
(73) Patentinhaber: Bayerische Motoren Werke Aktiengesellschaft, 80809 München (DE)
(72) Erfinder: Meister, Markus, 81245 München (DE); Schaper, Jens, Dr., 80135 München (DE); Taubenberger, Josef, 83052 Bruckmühl (DE); Sertl, Hans-Peter, 98378 Kemnath (DE)

(56) Entgegenhaltungen:
- EP-A- 0 592 815
- EP-A- 1 031 472
- DE-U- 29 821 278
- US-A- 5 829 841

## Beschreibung

Die Erfindung bezieht sich auf eine aufblasbare Kopfschutzvorrichtung für Insassen von Kraftfahrzeugen, wie sie im Oberbegriff des Hauptanspruchs beschrieben ist.

Aus der EP 0 592 815 B1 ist eine derartige Kopfschutzvorrichtung bekannt. Ein Luftsack ist am oberen Abschnitt eines als Diagonalgurt ausgelegten Sicherheitsgurtes angeordnet und mit dem einen Ende an der B-Säule der Fahrzeugkarosserie befestigt. In diesem Bereich befindet sich auch der Gasgenerator für das Befüllen des Luftsacks. Durch diese Anordnung eignet sich die vorbekannte Ausführung nicht für offene Fahrzeuge, wie beispielsweise Cabrios.

Die gattungsbildende DE 298 21 278 U zeigt demgegenüber eine Lösung, die sich an der Oberkante der Sitzlehne verwirklichen lässt. Der Luftsack in dieser Ausführung ist mit einem Endabschnitt über ein Beschlagsteil an der Fahrzeuglehne festgelegt und darüber hinaus relativ zum Sicherheitsgurt verschiebbar. Hierfür ist am Gassack eine Schlaufe vorgesehen, durch die das Gurtband des Sicherheitsgurtes verläuft.

Aufgabe der Erfindung ist es, eine weitere Kopfschutzvorrichtung bereitzustellen, die sich auch für offene Fahrzeuge eignet.

Die Aufgabe wird erfindungsgemäß mit den Merkmalen des Anspruchs 1 gelöst. Weitere Ausgestaltungen der Erfindung ergeben sich aus den Unteransprüchen.

Nach der Erfindung ist demnach die Kopfschutzvorrichtung an der Oberkante der Sitzlehne angeordnet und dort gehalten. Dadurch ist sie in besonderer Weise für offene Fahrzeuge, also Cabrio-Fahrzeuge geeignet. Bei diesen Fahrzeugtypen sind keine Karosserieabschnitte in Form von B- oder C-Säulen vorhanden. Des Weiteren sieht die Kopfschutzvorrichtung einen Gurtführungskanal vor, durch den das Gurtband verläuft. Damit und zusammen mit der gelenkigen Anordnung an der Sitzlehne folgt die Kopfschutzvorrichtung allen Bewegungen des Gurtbands, wie zum Beispiel An- und Abschnallvorgänge, Anpassung an die verschiedenen Insassengrößen, Sitz- bzw. Lehneneinstellbewegungen und Insassenbewegungen. Erreicht wird dies mit einem Kugelgelenk, bei dem das Kugelgehäuse an der Sitzlehne befestigt und die darin verdrehbare Gelenkkugel mit der Kopfschutzvorrichtung verbunden ist.

In einer zweckmäßigen Ausführung der Erfindung befindet sich der Gasgenerator für das Aufblasen des Luftsacks in der Sitzlehne des Fahrzeugsitzes. Die Gaszuführung erfolgt in zweckmäßiger Form durch das Kugelgelenk. Eine besonders kompakte Ausführung wird dadurch erhalten, in dem die Gaszuführung zwischen dem Gelenk und dem Luftsack zugleich die Kopfschutzvorrichtung trägt.

Die erfindungsgemäße Kopfschutzvorrichtung eignet sich in besonderem Maße für Fahrzeugsitze mit integriertem Gurtsystem, bei sich dem alle Gurtverankerungspunkte im oder am Sitz befinden. Eine lasttragende Gurtführung an der Sitzlehne und in der Nachbarschaft zu der Kopfschutzvorrichtung nimmt die aus dem Gurt resultierenden Kräfte aus, so dass sie nicht auf den Gurtführungskanal und damit auf die gesamte Kopfschutzvorrichtung übertragen werden.

Wie bereits erwähnt, gewährt die Erfindung auch für offene Fahrzeuge Kopfschutz. Sie ist jedoch auf solche Fahrzeuge nicht beschränkt, vielmehr eignet sie sich ganz allgemein bei Fahrzeugen sowohl für die vorderen, als auch die hinteren Sitzplätzen. Ebenso erlaubt sie die Verwendung von Kindersitzen. Es handelt es sich in jedem Fall um eine kostengünstige Lösung, die keinen Einfluss auf die Gurtgeometrie nimmt und bei der keine Komforteinbußen zu erwarten sind.

Weitere vorteilhafte Ausgestaltungen der Erfindung ergeben sich aus der nachfolgenden Beschreibung anhand der dazugehörenden Zeichnung. Es zeigen
- Figur 1: in schematischer Darstellung, den Oberkörper eines Fahrzeuginsassen mit einem seitlichen, aufgeblasenen Luftsack und
- Figur 2: in vergrößertem Maßstab eine schematische Seitenansicht eines Fahrzeugsitzes mit einer nicht aktivierten, erfindungsgemäßen Kopfschutzvorrichtung.

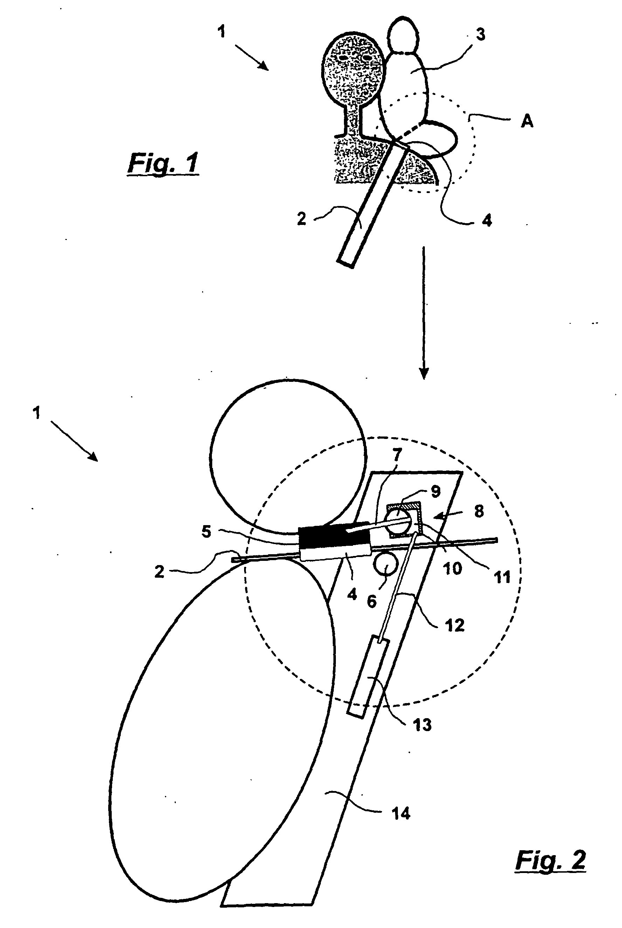

Bei der in Figur 1 schematisch dargestellten Person handelt es sich um den Insassen 1 eines Kraftfahrzeuges. Es sind Schulter- und Kopfbereich erkennbar, sowie ein über den Brustbereich verlaufendes Gurtband 2 eines nicht weiter dargestellten Dreipunkt-Sicherheitsgurtes. Ein aufgeblasener Luftsack 3 liegt auf der Schulter des Insassen auf und stützt dessen Kopf gegen seitliche Verlagerung und gegen benachbarte Karosserieteilen, die bei einem Seitencrash eindringen können. Die Anordnung des Luftsacks zeigt Fig. 2. Hierzu ist der in Fig. 1 mit dem Kreis A bezeichnete Ausschnitt in Fig. 2 um 90 Grad gedreht und in vergrößertem Maßstab dargestellt.

Der Luftsack 3 ist Teil einer Kopfschutzvorrichtung, die nach Fig. 2 neben dem Luftsack im wesentlichen aus einem Gurtführungskanal 4 und einer den zusammengefalteten Luftsack umhüllenden Abdeckung 5 besteht. Dabei befindet sich die Kopfschutzvorrichtung im Bereich der Oberkante einer Sitzlehne 14, die zu einem nicht näher dargestellten Fahrzeugsitz gehört, auf dem der Insassen 1 nach Figur 1 Platz nimmt. Nicht erkennbar, aber der Vollständigkeit halber erwähnt, ist der Fahrzeugsitz bevorzugt mit einem integrierten Sicherheitsgurtsystem ausgerüstet. Bei einem solchen Gurtsystem läuft das Gurtband von einem unteren, im Bereich eines Sitzkissens vorgesehenen Verankerungspunkt nach oben zu einer Umlenkung und von dort durch die Rücklehne zurück zu einem Gurtaufroller. In Fig. 2 ist die Umlenkung als Gurtführung 6 angedeutet, die im Falle eines sitzintegriertem Gurtsystems lasttragend ausgestaltet sein muss. Eine Schlosszunge, durch die das Gurtband hindurchgeschleift ist, lässt sich in einem Gurtschloss auf der gegenüberliegenden Seite des Sitzkissens verankern.

Das Gurtband 2 läuft - von dem Brustbereich des Fahrzeuginsassen kommend - durch den Gurtführungskanal 4 zu der Gurtführung 6. Dort wird es normalerweise nach unten umgelenkt, jedoch aus Gründen der Übersichtlichkeit läuft es in der vorliegenden Darstellung geradlinig nach hinten. Der Gurtführungskanal 4 mit dem Luftsack und dessen Abdeckung 5 sind über eine Rohrleitung 7 mit einer Gelenkkugel 9 eines insgesamt mit 8 bezeichneten Kugelgelenks starr verbunden. Die Gelenkkugel 9 ist dabei in einem fest an der Sitzlehne 14 verbundenen Kugelgehäuse 10 drehbar gelagert. Die Rohrleitung 7 durchdringt die Gelenkkugel 9 und mündet in eine Kammer 11 des Kugelgehäuses 10, die sich hinter der sphärische Führungsfläche öffnet. Das andere Ende der Rohleitung 7 liegt innerhalb des zusammengefalteten Luftsacks.

In einer nicht dargestellten Ausführung ist der Gurtführungskanal 4 mit seinen weiteren Teilen - Luftsack und dessen Abdeckung - direkt mit dem Kugelgelenk 8 verbunden. Die Rohrleitung 7 hat in diesem Fall nicht notwendigerweise eine tragende Funktion und kann daher auch flexibel ausgelegt sein.

In jeden Fall jedoch ist die Kopfschutzeinrichtung durch das Kugelgelenk in seiner Höhenlage verschwenkbar und darüber hinaus in sich verdrehbar, so dass sie sich leicht verschieden großen Fahrzeuginsassen anpassen kann.

In die Kammer 11 mündet eine zweite Rohrleitung 12 , die als Zuleitung für einen in der Sitzlehne vorgesehenen Gasgenerators 13 dient. Der Gasgenerator braucht nicht unbedingt dort untergebracht sein. Je nach Auslegung des Fahrzeuges bzw. des Sitzes kann er seinen Platz im Fahrzeugaufbau oder in der Kopfstütze vorgesehen sein. Die Abmessungen der Kammer 11 sind gegenüber dem Schwenkbereich der Gelenkkugel 9 so gewählt, dass in jeder ihrer möglichen Lage, die durch den angelegten Gurt hervorgerufen wird, die Austrittsöffnung der Rohrleitung 7 nicht versperrt ist.

Wird durch einen nicht näher dargestellten Sensor ein Seitenaufprall erkannt, zündet der Gasgenerator 13 und über die Rohrleitung 12 strömt Gas in die Kammer 11 und von dort durch die Gelenkkugel 9 über die Rohrleitung 7 in den Gassack hinein. Der Gassack wird aufgeblasen und nimmt seine in Fig. 1 gezeigte Form an.

## Patentansprüche

1. Aufblasbare Kopfschutzvorrichtung für Insassen von Kraftfahrzeugen, mit einem Luftsack, der sich im aufgeblasenen Zustand seitlich über der Schulter zwischen Kopf des Fahrzeuginsassen und den benachbarten Karosserieteilen erstreckt, und mit einem über den Brustbereich des Fahrzeuginsassen verlaufenden Sicherheitsgurt, dem die Kopfschutzvorrichtung im Bereich der Oberkante einer Sitzlehne eines Fahrzeugsitzes zugeordnet ist, wobei das Gurtband (2) durch einen Gurtführungskanal (4) der Kopfschutzvorrichtung verläuft und **dadurch gekennzeichnet, dass** die Kopfschutzvorrichtung über ein Gelenk (8) in seiner Höhenlage schwenkbar und in sich verdrehbar im Bereich der Oberkante der Sitz- dass lehne (14) befestigt ist und, dass es sich bei dem Gelenk (8) um ein Kugelgelenk handelt mit einem an der Sitzlehne (14) befestigten Kugelgehäuse (10) und einer in dem Kugelgehäuse (10) verdrehbar gehaltenen Gelenkkugel (9), die mit der Kopfschutzvorrichtung verbunden ist.

2. Kopfschutzvorrichtung nach Anspruch 1 mit einem Gasgenerator für das Aufblasen des Luftsacks, **dadurch gekennzeichnet, dass** sich der Gasgenerator (13) in der Sitzlehne (14) des Fahrzeugsitzes befindet und über das Kugelgelenk (8) den Luftsack aufbläst.

3. Kopfschutzvorrichtung nach Anspruch 2, **dadurch gekennzeichnet, dass** in dem Kugelgehäuse (10) des Gelenks (8) eine Kammer (11) vorgesehen ist, in die eine Rohrleitung (12) des Gasgenerators (13) mündet, und dass eine weitere Rohrleitung (7) von dieser Kammer (11) durch die Gelenkkugel (9) hindurch zum Luftsack führt.

4. Kopfschutzvorrichtung nach Anspruch 3, **dadurch gekennzeichnet, dass** der inaktive Luftsack gefaltet auf dem Luftführungskanal (4) abgelegt und mit einer Abdeckung (5) versehen ist und dass die Rohrleitung (7) zu dem Luftsack an dem Gurtführungskanal (4) angebunden ist.

5. Kopfschutzvorrichtung nach einem der Ansprüche 1 bis 4, **dadurch gekennzeichnet, dass** die Sitzlehne (14) des Fahrzeugsitzes in Nachbarschaft zu der Kopfschutzvorrichtung eine lasttragende Gurtführung (6) aufweist.

## Claims

1. An inflatable head protecting device for occupants of motor vehicles; comprising an airbag which when inflated extends sideways over the shoulder between the occupant's head and the neighbouring car-body parts, and a safety belt extending over the occupant's chest region and associated with the head protecting device at the top edge of the back of a seat in the vehicle, wherein the belt strap (2) extends through a belt guide duct (4) in the head protecting device, and **characterised in that** the head protector is pivotable in its vertical position via a joint (8) and is fastened so as to be rotatable near the top edge of the seat back (14), and the joint (8) is a ball and socket joint with a socket (10) fastened to the seat back (14) and a ball held rotatably in the socket (10) and connected to the head protecting device.

2. A head protecting device according to claim 1, comprising a gas generator for inflating the airbag, **characterised in that** the gas generator (13) is in the back (14) of the seat and inflates the airbag via the ball and socket joint (8).

3. A head protecting device according to claim 2, **characterised in that** a chamber (11) into which a pipe (12) from the gas generator (13) extends is provided in the socket (10) of the joint (8), and a second pipe (7) leads from the chamber (11) through the ball (9) to the airbag.

4. A head protecting device according to claim 3, **characterised in that** the airbag, when not in use, is folded and placed on the air guide duct (4) and provided with a cover (5), and the pipe (7) is attached to the airbag on the belt-guiding duct (4).

5. A head protecting device according to any of claims 1 to 4, **characterised in that** the seat back (14) has a load-bearing belt guide (6) near the head protecting device.

## Revendications

1. Dispositif gonflable de protection de la tête pour des occupants de véhicules automobiles, comportant :
- un coussin gonflable qui, lorsqu'il est gonflé, s'étend latéralement sur les épaules entre la tête de l'occupant de véhicule et les parties voisines de carrosseries, et
- une ceinture de sécurité qui s'étend sur la zone du buste de l'occupant de véhicule et à laquelle est associé le dispositif de protection de la tête situé dans la zone du bord supérieur d'un dossier d'un siège de véhicule,
- la courroie (2) de ceinture s'étendant à travers un canal de guidage de ceinture (4) du dispositif de protection de la tête,
**caractérisé en ce que**
le dispositif de protection de la tête peut pivoter dans sa position haute par l'intermédiaire d'une articulation (8) et est fixé de façon à tourner sur soi dans la zone du bord supérieur du dossier de siège (14), et
l'articulation (8) est une articulation sphérique comportant un boîtier sphérique (10) fixé au dossier de siège (14) et une sphère articulée (9) maintenue de façon à pouvoir tourner dans le boîtier sphérique (10) et liée au dispositif de protection de la tête.

2. Dispositif de protection de la tête selon la revendication 1, comportant un générateur de gaz destiné à gonfler le coussin gonflable,
**caractérisé en ce que**
le générateur de gaz (13) se trouve dans le dossier (14) du siège de véhicule et gonfle le coussin gonflable par l'intermédiaire de l'articulation sphérique (8).

3. Dispositif de protection de la tête selon la revendication 2,
**caractérisé en ce que**
dans le boîtier sphérique (10) de l'articulation (8) est prévue une chambre (11) dans laquelle débouche une conduite (12) du générateur de gaz (13), et
une autre conduite (7) mène de cette chambre (11) à travers la sphère articulée (9) jusqu'au coussin gonflable.

4. Dispositif de protection de la tête selon la revendication 3,
**caractérisé en ce que**
le coussin gonflable inactif est déposé plié sur le canal de guidage d'air (4) et est muni d'un recouvrement (5), et
la conduite (7) vers le coussin gonflable est liée au canal de guidage de ceinture (4).

5. Dispositif de protection de la tête selon l'une des revendications 1 à 4,
**caractérisé en ce qu'**
à proximité du dispositif de protection de la tête, le dossier (14) du siège de véhicule présente un guidage de ceinture (6) qui supporte les charges.
